# EUROPÄISCHE PATENTANMELDUNG

(11) **EP 4 270 336 A2**
(43) Veröffentlichungstag der Anmeldung: **01.11.2023**
(21) Anmeldenummer: 23168606.4
(22) Anmeldetag: 18.04.2023
(51) Int. Cl.: G07C 9/00, B60R 25/20, B60R 25/24

(54) **MODUL ZUR DRAHTLOSEN AUTHENTIFIZIERUNG EINES NUTZERS FÜR EIN SCHLÜSSELLOSES ZUGANGSSYSTEM EINES KRAFTFAHRZEUGS**

(30) Priorität: 29.04.2022 DE 102022204232
(71) Anmelder: VOLKSWAGEN AG, 38440 Wolfsburg (DE)
(72) Erfinder: Ette, Bernd, 38442 Wolfsburg (DE)

(57) **Zusammenfassung**

Die Erfindung betrifft eine Drahtlosschnittstelle zur Erfassung eines autorisierten Zugriffs eines Nutzer auf ein schlüsselloses Zugangssystem (22) eines Kraftfahrzeugs (42).

Es ist vorgesehen, dass der für die drahtlose Kommunikation vorgesehene Teil der Drahtlosschnittstelle mit dem die Elektronik enthaltenden Teil der Drahtlosschnittstelle lösbar verbunden ist, um die Einbau- und Montagevielfalt der Drahtlosschnittstelle zu verbessern.

## Beschreibung

Die Erfindung betrifft ein Modul zur drahtlosen Authentifizierung eines Nutzers für ein schlüsselloses Zugangssystem eines Kraftfahrzeugs. Darüber hinaus betrifft die Erfindung ein das Modul aufweisendes Kraftfahrzeug mit einem schlüssellosen Zugangssystem.

Moderne Fahrzeuge weisen eine Vielzahl von elektronischen Systemen auf, die auf eine drahtlose Interaktion des Nutzers mit dem Fahrzeug gerichtet sind. Beispielsweise sind Lösungen bekannt, die einen schlüssellosen Zugang zu einem Fahrzeug ermöglichen. Durch eine drahtlose Kommunikation zwischen einer in dem Fahrzeug befindlichen Drahtlosschnittstelle und beispielsweise einem mobilen Endgerät des Nutzers kann der Nutzer per Eingabe in das mobile Endgerät die Zentralverriegelung des Fahrzeugs verriegeln oder entriegeln. Um festzustellen, ob der Nutzer autorisiert ist, auf das Zugangssystem des Fahrzeugs zuzugreifen, ist eine Authentifizierung des Nutzers durch ein elektronisches System des Fahrzeugs erforderlich.

In der US 10,343,650 B1 wird eine Lösung vorgeschlagen, bei welcher ein mit der Zentralverriegelung verbundenes Authentifizierungsmodul in der Fahrzeugtür installiert wird, das drahtlos mittels einer NFC-Schnittstelle ein Endgerät des Nutzers erkennen kann. Die Authentifizierung des Nutzers erfolgt durch einen Abgleich von im Speicher des Authentifizierungsmoduls hinterlegten biometrischen Daten und den von dem Endgerät des Nutzers übermittelten biometrischen Daten. Nach abgeschlossener Authentifizierung entriegelt das Authentifizierungsmodul die Zentralverriegelung des Fahrzeugs automatisch.

Weitere Beispiele relevanter Art sind in den Druckschriften DE 10 2016 007 410 A1, WO 2021/039830 A1, US 6,150,926 A, EP 3 501 916 A1, DE 195 15 549 C1 und EP 2 782 075 A2 gezeigt.

Problematisch an den bekannten Lösungen ist, dass die Drahtlosschnittstellen zur Erfassung eines autorisierten Zugriffs eines Nutzers an der Bedienstelle des Fahrzeugs, also in einer Fahrzeugtür oder -klappe, notwendig sind, wodurch der Einbauaufwand und die Kosten des Fahrzeugs erhöht werden.

Der Erfindung liegt nun die Aufgabe zugrunde, eine kostengünstigere Drahtlosschnittstelle zur Authentifizierung eines Nutzers für ein schlüsselloses Zugangssystem eines Kraftfahrzeugs bereitzustellen.

Die erfindungsgemäße Aufgabe wird gelöst durch ein Modul zur drahtlosen Authentifizierung eines Nutzers für ein schlüsselloses Zugangssystem eines Kraftfahrzeugs und ein das Modul aufweisendes Kraftfahrzeug gemäß den unabhängigen Patentansprüchen. Bevorzugte Weiterbildungen sind Gegenstand der jeweils rückbezogenen Unteransprüche.

Ein erster Aspekt der Erfindung betrifft ein Modul zur drahtlosen Authentifizierung eines Nutzers für ein schlüsselloses Zugangssystem eines Kraftfahrzeugs, insbesondere eines PKW mit einem Verbrennungs-, Elektro- oder Hybridmotor. Das Modul enthält einen ersten Abschnitt aufweisend eine zum Senden und Empfangen von Funksignalen eingerichtete Antenne und eine erste Schnittstelle zum Übertragen der gesendeten oder empfangenen Funksignale. Mit anderen Worten umfasst der erste Abschnitt eine Drahtlosschnittstelle, die die Funktion des Empfangens und Sendens von drahtlosen Funksignalen mit anderen Endgeräten übernehmen kann und die empfangenen oder gesendeten Funksignale über die erste Schnittstelle bereitstellen kann.

Das Modul umfasst ferner einen lösbar mit dem ersten Abschnitt verbundenen zweiten Abschnitt. Lösbar bedeutet insbesondere, dass die Abschnitte ohne Beschädigung wieder voneinander gelöst werden können. Im Lichte der Erfindung kann lösbar aber auch bedingt lösbare Verbindungen, wie beispielsweise Klebstoff- oder Nietverbindungen, umfassen. Bedingt lösbar ist eine Verbindung, wenn nur Hilfsfügeteile zerstört werden müssen, um die Verbindung zu lösen. Mit anderen Worten können die beiden Abschnitte als zwei voneinander körperlich trennbare Einheiten aufgefasst werden. Besonders vorteilhaft bei der erfindungsgemäßen Lösung ist die Vereinfachung der Montage des erfindungsgemäßen Moduls beim Einbau an dem Einsatzort. Durch die lösbare Trennung der beiden Abschnitte des Moduls wird die Einbau- und Montagevielfalt erhöht. Beispielsweise kann das Modul in voneinander getrennten Einbauschritten in ein Fahrzeug montiert werden. So ist es möglich, dass der erste Abschnitt des Moduls in eine erste Fahrzeugkomponente eingebaut wird und der zweite Abschnitt des Moduls in eine andere Fahrzeugkomponente eingebaut wird und die Verbindung der beiden Abschnitte nach dem Ein- oder Zusammenbau der beiden Fahrzeugkomponenten erfolgt.

Ähnlich verhält es sich bei der Nachrüstung bestehender Fahrzeuge, bei denen der nachträgliche Einbau des Moduls erleichtert wird. Die körperliche Ausgestaltung der beiden Abschnitte ist jeweils für sich genommen variabel an den Einsatzort, beispielsweise auf verschiedene Fahrzeugmodelle und -typen, anpassbar.

Ein weiterer vorteilhafter Aspekt, der sich aus der lösbaren Verbindung der beiden Abschnitte des Moduls ergibt, ist, dass der erste Abschnitt an oder in einer Fahrzeugkomponente angeordnet werden kann, die nicht von einem abschirmenden Material, beispielsweise einer Metallkonstruktion des Fahrzeugs, umgeben oder abgeschirmt ist. Insofern können die Reichweite und Funktionalität der Antenne des erfindungsgemäßen Moduls wesentlich verbessert werden.

Der zweite Abschnitt weist eine zur Verbindung mit der ersten Schnittstelle eingerichtete zweite Schnittstelle auf. Die erste Schnittstelle und die zweite Schnittstelle sind derart eingerichtet, dass deren Verbindung eine mechanische Verbindung ist. Zusätzliche ist deren Verbindung bevorzugt ferner eine zur Datenübertragung eingerichtete Verbindung. Die mechanische Verbindung kann eingerichtet sein, den ersten Abschnitt und den zweiten Abschnitt kraftschlüssig oder formschlüssig zu verbinden. Mithin kann die mechanische Verbindung durch Befestigungsmittel zur Befestigung des ersten Abschnitts des Moduls an dem zweiten Abschnitt des Moduls ausgestaltet sein. Eine mechanische Verbindung ist beispielsweise eine Schraub-, Steck-, Kleb- oder Nietverbindung. Mechanische Verbindungen haben den Vorteil, dass der erste Abschnitt fest mit dem zweiten Abschnitt verbunden ist, so dass der erste Abschnitt nicht eigenständig an einer Fahrzeugkomponente befestigt werden muss, sondern durch eine Befestigung des zweiten Abschnitts an einer Fahrzeugkomponente mittelbar befestigt ist.

Der zweite Abschnitt weist ferner eine mit einem Zugangssystem zum Verriegeln oder Entriegeln einer Fahrzeugtür verbundene dritte Schnittstelle und eine mit der zweiten Schnittstelle und der dritten Schnittstelle verbundene Steuereinrichtung auf. Die dritte Schnittstelle kann beispielsweise zur Kommunikation mit einem Datenbus, wie CAN, eingerichtet oder eine Ethernet-Schnittstelle sein. Dies sind in der Fahrzeugtechnik gängige Schnittstellen, so dass das Modul in bestehende Fahrzeuge eingebaut oder nachgerüstet werden kann. Die Steuereinrichtung ist dazu eingerichtet, die Antenne über die mit der zweiten Schnittstelle verbundene erste Schnittstelle anzusteuern und ein auf Laufzeitmessungen basierendes Positionierungsverfahren unter Verwendung der Antenne durchzuführen.

Auf Laufzeitmessungen basierende Positionierungsverfahren haben gegenüber herkömmlichen, auf Feldstärkemessungen basierenden Positionierungsverfahren den Vorteil, dass diese weniger anfällig gegen Relay Station Attacken (RSA) auf schlüssellose Fahrzeugzugangssysteme sind, bei denen ein Angreifer ein oder mehrere Funkverstärker zwischen Fahrzeug und Schlüssel positioniert und dadurch die Sendeleistung der vom Schlüssel abgegebenen und der vom Fahrzeug detektierten Funksignale erhöht. Anhand der herkömmlichen Feldstärkemessung ortet das Fahrzeug den Schlüssel somit fälschlicherweise an einer näheren als dessen realer Position und ermöglicht eine Öffnung. RSA-Attacken ermöglichen es somit, das Fahrzeug eines Nutzers zu öffnen, auch wenn dieser sich außerhalb der normalen Reichweite des schlüssellosen Zugangssystems, zum Beispiel in einem Café oder seiner Wohnung, befindet und sein Fahrzeug sicher verschlossen glaubt.

Als Maßnahme gegen diesen Angriff verwendet das erfindungsgemäße Modul ein auf Laufzeitmessungen basierendes Positionierungsverfahren als sogenannte "Relais Station Attack Defense" Technik, kurz RSAD. Bei einer solchen Laufzeitmessung (time off light - ToF) wird im Wesentlichen ein erstes Funksignal von der Steuereinrichtung über die Antenne des Moduls an einen Sendeempfänger eines mobilen Endgeräts oder eines Fahrzeugschlüssels gesendet. Nach einer gewissen Verarbeitungszeit wird von dem mobilen Endgerät oder dem Fahrzeugschlüssel ein zweites Funksignal an das Modul zurückgesendet.

Anhand dieser Zeit zwischen dem Senden des ersten Funksignals und dem Empfangen des zweiten Funksignals t₂-t₁, reduziert um die Verarbeitungszeit Δt_{VB}, kann anhand der Ausbreitungsgeschwindigkeit der Funksignale, das heißt der Lichtgeschwindigkeit, die Entfernung d zwischen der Antenne des Moduls und dem mobilen Endgerät oder dem Fahrzeugschlüssel gemäß d=((t₂-t₁)-Δt_{VB}/2c) ermittelt werden. Die Verwendung zeitlich hochaufgelöster Funksignale ermöglicht eine Ortsauflösung von deutlich unter einem Meter.

Die Steuereinrichtung ist ferner dazu eingerichtet, ein auf einem Ergebnis des Positionierungsverfahrens basierendes Signal über die dritte Schnittstelle an das Zugangssystem zu senden. Bei dem Ergebnis handelt es sich zumindest um eine Entfernung zwischen dem Fahrzeug und dem mobilen Endgerät oder dem Fahrzeugschlüssel, insbesondere sofern das erfindungsgemäße Modul nur über eine Antenne Funksignale empfängt oder sendet. Umfasst das Modul mehrere Antennen oder erhält die Steuereinrichtung des erfindungsgemäßen Moduls zusätzliche Funksignale von anderen Antennen, beispielsweise Antennen von anderen im Fahrzeug enthaltenden elektronischen Systemen, wird mittels der Laufzeitmessungen eine Peilung (Triangulation) des mobilen Endgeräts oder des Fahrzeugschlüssels und dessen relative Lage zum Modul bestimmt. Folglich kann die Steuereinrichtung des Moduls dazu eingerichtet sein, mittels der Laufzeitmessungen eine Peilung (Triangulation) des mobilen Endgeräts oder des Fahrzeugschlüssels und dessen relative Lage zum Modul zu bestimmen.

Mit Kenntnis der Lage des Moduls, beispielsweise über GPS, ist somit auch die absolute Lage des mobilen Endgeräts oder des Fahrzeugschlüssels ermittelbar. Die Steuereinrichtung ist bevorzugt dazu ausgebildet, anhand der Entfernung des Schlüssels, besonders bevorzugt auch anhand der relativen oder absoluten Lage des mobilen Endgeräts oder des Fahrzeugschlüssels, eine Authentifikation des Nutzers durchzuführen und zu ermitteln, ob ein Entriegeln oder Verriegeln des Fahrzeugs über das schlüssellose Zugangssystem erfolgen soll. Besonders bevorzugt erfolgt eine Authentifikation des Nutzers, wenn der Abstand zwischen dem mobilen Endgerät oder dem Fahrzeugschlüssel und dem Modul einen vorbestimmten Grenzwert unterschreitet. In diesem Fall erfolgt ein Entriegeln oder Verriegeln des Fahrzeugs bevorzugt, wenn der so authentifizierte Nutzer ein Befehlssignal über das erfindungsgemäße Modul an das schlüssellose Zugangssystem des Fahrzeugs sendet. Das Befehlssignal kann beispielsweise über das mobile Endgerät, den Fahrzeugschlüssel und/oder eine erfasste Berührung des Nutzers, beispielsweise eine Klopfgeste, erfolgen. Die erfindungsgemäße Authentifikation des Nutzers verhindert, dass sich nicht autorisierte Nutzer Zugang zum Fahrzeug beschaffen können. Das Befehlssignal verhindert ferner vorteilhaft ein unbeabsichtigtes Öffnen des Fahrzeugs.

In bevorzugter Ausgestaltung der Erfindung ist vorgesehen, dass die Steuereinrichtung zum Senden und Empfangen von Ultrabreitband-Pulsen (Ultra-wideband - UWB) über die Antenne eingerichtet ist. Insbesondere sind die Steuereinrichtung und die Antenne zum Senden und Empfangen von UWB-Pulsen in sehr großen Frequenzbereichen, insbesondere in einem Frequenzbereich von 3,1 bis 10,6 GHz, bevorzugt in einem Frequenzbereich von 3,5 bis 9 GHz, besonders bevorzugt in einem Frequenzbereich von 6 GHz bis 8,5 GHz, ausgebildet. Die Sendeleistung der UWB-Pulse ist gering. Deren Bandbreite beträgt mindestens 500 MHz.

Die Steuereinrichtung ist bevorzugt zum Senden und Empfangen von Funksignalen über die Antenne mit einer Sendeleistung zwischen 0,5 mW / -41,3 dBm/MHz ausgebildet. Ferner bevorzugt ist die Steuereinrichtung zum Senden und Empfangen von Funksignalen über die Antenne gemäß dem Standard IEEE 802.15.4 (insbesondere den Abschnitten zum UWB PHY Layer) und bevorzugt gemäß dem Standard IEEE 802.15.4z eingerichtet. Durch die Streuung der Signale über derart große Frequenzbereiche stören UWB-Signale andere Funksignale nur minimal. Ferner können mittels UWB-Sendeempfängern zeitlich stark lokalisierte Sendepulse mit geringer Halbwertsbreite (FWHM) übermittelt werden. Dies basiert auf der hohen Frequenzbreite der Sendepulse (ΔE*Δt > const.). Somit sind UWB-Signale für zeitaufgelöste Laufzeitmessungen besonders geeignet und ermöglichen Positionierungen mit sehr hoher Ortsauflösung.

In einer weiteren bevorzugten Ausgestaltung der Erfindung ist vorgesehen, dass die Steuereinrichtung zum Senden und Empfangen von Bluetooth-Pulsen über die Antenne eingerichtet ist. Insbesondere sind die Steuereinrichtung und die Antenne zum Senden und Empfangen von Bluetooth-Pulsen, besonders bevorzugt Bluetooth Low Energy-Pulsen, im 2,4-GHz-ISM-Band (2400 bis 2483,5 MHz) eingerichtet. Bluetooth-Signale sind für zeitaufgelöste Laufzeitmessungen, also für ein auf Laufzeitmessungen basierendes Positionierungsverfahren, geeignet. Vor allem die Funktechnologie Bluetooth Low Energy bietet Vorteile hinsichtlich des Stromverbrauchs und der Kosten.

Sowohl über UWB-Pulse als auch über Bluetooth-Pulse ist die Ermittlung der Position eines mobilen Endgeräts und/oder eines Fahrzeugschlüssels in einem Abstand von 0,1 m bis 1,5 m zur Antenne möglich.

In einer weiteren bevorzugten Ausgestaltung der Erfindung ist vorgesehen, dass die Steuereinrichtung zum Senden und Empfangen von UWB-Pulsen und Bluetooth-Pulsen über die Antenne eingerichtet ist. Vorzugsweise ist eine weitere zum Senden und Empfangen von Funksignalen eingerichtete Antenne im ersten Abschnitt des Moduls vorgesehen, wobei die Steuereinrichtung eingerichtet ist, die weitere Antenne über die mit der zweiten Schnittstelle verbundene erste Schnittstelle anzusteuern. Folglich ist es möglich, mittels der Steuereinrichtung UWB-Pulse über die eine Antenne und Bluetooth-Pulse über die andere Antenne zu senden und zu empfangen, um ein auf Laufzeitmessungen basierendes Positionierungsverfahren unter Verwendung sowohl der UWB-Pulse als auch der Bluetooth-Pulse durchzuführen. Die Kombination beider Funktechnologien verbessert die Verlässlichkeit des Positionierungsverfahrens. Die Redundanz, die sich aus der Kombination beider Funktechnologien ergibt, kann außerdem die Anwendungslebensdauer des Moduls insofern verlängern, als dass ein (technisches) Versagen einer der beiden Funktechnologien nicht zu einem Funktionsverlust des Moduls führt, da die jeweils andere Funktechnologie die Funktion der Positionsermittlung übernimmt. Mit anderen Worten kann der Nutzer des Fahrzeugs unter Umständen überhaupt nicht wahrnehmen, dass eine der beiden Funktechnologien versagt, da das schlüssellose Zugangssystem des Fahrzeugs weiterhin über das erfindungsgemäße Modul bedienbar ist.

Bevorzugt ist die Steuereinrichtung ferner zum Senden und Empfangen von Nahfeld-Kommunikation-Funksignalen (Near Field Communication - NFC) über die Antenne eingerichtet. Insbesondere ist die Antenne zum Senden und Empfangen von NFC-Funksignalen eingerichtet. Die NFC-Funktechnologie ermöglicht eine drahtlose Kommunikation des Moduls mit einem mobilen Endgerät oder einem Fahrzeugschlüssel mittels NFC-Funksignalen zur Bedienung des schlüssellosen Zugangssystems des Fahrzeugs durch den Benutzer. Die Reichweite dieser Funktechnologie ist üblicherweise auf einige Zentimeter begrenzt.

Vorzugsweise umfasst die Steuereinrichtung eine erste Steuereinrichtung und eine zweite Steuereinrichtung, die auf einer Leiterplatte angeordnet sind. Die erste Steuereinrichtung umfasst eine integrierte Schaltung (IC) zur Ansteuerung der Antenne. Vorzugsweise ist die integrierte Schaltung eingerichtet, die Antenne über die mit der zweiten Schnittstelle verbundene erste Schnittstelle anzusteuern. Ferner ist die integrierte Schaltung vorzugsweise dazu eingerichtet, UWB-Pulse, Bluetooth-Pulse und/oder NFC-Funksignale über die Antenne, bevorzugt auch zusätzlich über weitere Antennen, zu empfangen sowie zu senden. Mit anderen Worten dient die integrierte Schaltung als Treiber für die Antenne des Moduls oder für eine Vielzahl von Antennen, die in dem ersten Abschnitt des Moduls und/oder in einem elektronischen System des Fahrzeugs enthalten sind.

Die zweite Steuereinrichtung kann einen Mikrocontroller oder Mikroprozessor umfassen, der eingerichtet ist, das auf Laufzeitmessungen basierende Positionierungsverfahren unter Verwendung der integrierten Schaltung der ersten Steuereinrichtung und der Antenne durchzuführen und basierend auf einem Ergebnis des Positionierungsverfahrens das Signal über die dritte Schnittstelle an das Zugangssystem zu senden. Mit anderen Worten dient die zweite Steuereinrichtung als funktionelle Berechnungseinheit, die die von der ersten Steuereinrichtung und der Antenne oder der Vielzahl von Antennen erhaltenen Daten zur Authentifikation des Nutzers auswertet und das Signal zum Verriegeln oder Entriegeln des Fahrzeugs an das Zugangssystem überträgt. Die Übertragung erfolgt bevorzugt in Reaktion auf eine Eingabe, beispielsweise ein Klopfsignal oder einen Tastendruck, eines authentifizierten Nutzers. Ebenfalls bevorzugt wird diese Eingabe jedoch alternativ von einer Steuereinheit des Zugangssystems ausgewertet.

In einer ebenfalls bevorzugten Ausgestaltung der Erfindung umfasst der erste Abschnitt des Moduls eine Anzeige, ein alphanumerisches Display oder eine LED. Die Steuereinrichtung ist bevorzugt dazu eingerichtet, die Anzeige, das alphanumerische Display oder die LED über eine Schnittstelle, bevorzugt über die mit der zweiten Schnittstelle verbundene erste Schnittstelle des Moduls, anzusteuern. Die Ansteuerung kann derart erfolgen, dass dem Nutzer Informationen bezüglich der Funktionen des Moduls oder des Fahrzeugs auf optischem Wege übermittelt werden.

In einer ebenfalls bevorzugten Ausgestaltung der Erfindung umfasst der erste Abschnitt des Moduls einen transparenten Träger. Transparent ist ein Träger, wenn er durchlässig für Licht mit Wellenlängen im sichtbaren Bereich des menschlichen Auges, beispielweise von 400 nm bis 800 nm, ist. Bevorzugt ist der Träger teilweise oder vollständig transparent. Durch die Verwendung eines transparenten oder teilweise transparenten Trägers kann der erste Abschnitt des Moduls beispielsweise in oder auf transparenten Materialien, wie beispielsweise transparenten Fahrzeugkomponenten, angeordnet sein, ohne die Sicht durch das transparente Material erheblich zu beeinträchtigen. Insofern wird die Montage- und Einbauvielfalt des erfindungsgemäß vorgeschlagenen Moduls erhöht. Außerdem wird die Reichweite und Funktionalität der Antenne des erfindungsgemäßen Moduls wesentlich verbessert, da kein abschirmendes Material, wie beispielsweise eine Metallkonstruktion des Fahrzeugs, die drahtlose Verbindung zwischen Antenne und mobilem Endgerät oder Fahrzeugschlüssel beeinträchtigt.

In einer ebenfalls bevorzugten Ausgestaltung der Erfindung ist der erste Abschnitt des Moduls als ein Teil einer Fahrzeugscheibe eines Kraftfahrzeugs ausgebildet, auf den die Antenne aufgebracht ist. Bevorzugt ist die Antenne auf der Fahrzeugscheibe aufgedampft, besonders bevorzugt unmittelbar aufgedampft. Dies ist ein vorteilhaftes Beispiel für eine einfache und kostengünstige Montage des ersten Abschnitts in oder auf einer Fahrzeugkomponente. Die Antenne kann beispielsweise vor Einbau der Fahrzeugkomponente auf die Fahrzeugkomponente aufgebracht, insbesondere aufgedampft, werden und die Verbindung des ersten Abschnitts mit dem zweiten Abschnitts erst nach dem Einbau der Fahrzeugkomponente erfolgen. Insofern können Kosten aufgrund der erleichterten Montage des erfindungsgemäßen Moduls in ein Fahrzeug gespart werden.

Der zweite Abschnitt des Moduls weist vorzugsweise einen zur Befestigung an einer Fahrzeugkomponente eines Kraftfahrzeugs eingerichteten Befestigungsabschnitt auf. Der Befestigungsabschnitt kann formschlüssige und/oder kraftschlüssige Befestigungsmittel umfassen, die eingerichtet sind, den zweiten Abschnitt des Moduls an der Fahrzeugkomponente des Kraftfahrzeugs zu befestigen. Aufgrund der erfindungsgemäßen lösbaren Verbindung zwischen dem ersten und dem zweiten Abschnitt kann der zweite Abschnitt während der Montage für sich genommen über den Befestigungsabschnitt an einer Fahrzeugkomponente befestigt sein und erst in einem späteren Einbauschritt oder nachträglich mit dem ersten Abschnitt lösbar verbunden werden. Die dadurch erleichterte Montage des Moduls in dem Fahrzeug führt zu Kosteneinsparungen.

In einer ebenfalls bevorzugten Ausgestaltung der Erfindung umfasst das Modul ferner einen Beschleunigungssensor. Die Steuereinrichtung ist bevorzugt dazu eingerichtet, aus Sensordaten des Beschleunigungssensors Klopfgesten zur Bedienung des Zugangssystems zu erfassen. Klopfgesten sind beispielsweise vorbestimmte zeitliche Abfolgen von Klopfsignalen. Diese können in einer Speichereinheit der Steuereinrichtung abgelegt sein. Stimmt eine durch die Steuereinrichtung über den Beschleunigungssensor erfasste Signalfolge mit einer im Speicher abgelegten Signalfolge überein, so kann die Steuereinrichtung dies als Klopfgeste zur Bedienung des Zugangssystems auffassen. In Verbindung mit einer erfolgreichen Authentifizierung des Nutzers, also basierend auf dem Ergebnis des Positionierungsverfahrens, kann die Steuervorrichtung das Signal über die dritte Schnittstelle an das Zugangssystem senden, um das Fahrzeug zu verriegeln oder zu entriegeln. Zusätzlich oder alternativ kann die Steuereinrichtung dazu eingerichtet sein, basierend auf den Daten des Beschleunigungssensors den Zugang eines Nutzers zum Zugangssystem zu sperren. Dies dient als zusätzlicher Diebstahlschutz.

Zusätzlich oder alternativ kann die Steuereinrichtung dazu eingerichtet sein, die Antenne zur drahtlosen Datenkommunikation mit einem Sendeempfänger eines elektronischen Funkschlüssels und/oder eines mobilen Endgeräts anzusteuern. Die drahtlose Datenkommunikation kann genutzt werden, um von dem Nutzer über den Sendeempfänger des elektronischen Funkschlüssels und/oder des mobilen Endgeräts gesendete Bedienungsanweisungen für das Zugangssystem über die Antenne zu empfangen. In Verbindung mit einer erfolgreichen Authentifizierung des Nutzers, also basierend auf dem Ergebnis des Positionierungsverfahrens, kann die Steuervorrichtung das Signal über die dritte Schnittstelle an das Zugangssystem senden, um das Fahrzeug entsprechend der Bedienungsanweisung des Nutzers zu verriegeln oder zu entriegeln.

Ein weiterer Aspekt der vorliegenden Erfindung betrifft ein Kraftfahrzeug, insbesondere ein Kraftfahrzeug mit Verbrennungs-, Elektro- oder Hybridmotor, welches ein schlüsselloses Zugangssystem zum elektronisch gesteuerten Verriegeln und Entriegeln zumindest einer Fahrzeugtür des Kraftfahrzeugs und das erfindungsgemäße Modul zur drahtlosen Authentifizierung eines Nutzers für das schlüssellose Zugangssystem des Kraftfahrzeugs umfasst. Das Zugangssystem weist bevorzugt eine Zentralverriegelung, besonders bevorzugt eine elektrisch betätigte Zentralverriegelung, auf, die zum Entriegeln und Verriegeln der Schlösser der zumindest einen Fahrzeugtür ausgebildet ist. Das schlüssellose Zugangssystem ist bevorzugt dazu ausgebildet, nur bestimmte Fahrzeugtüren, beispielsweise eine Fahrertür oder eine Heckklappe, oder eine Motorhaube oder eine Tankdeckelklappe zu öffnen. Alternativ ist das Zugangssystem dazu ausgebildet, alle Fahrzeugtüren des Fahrzeugs, die Motorhaube und/oder die Tankdeckelklappe simultan zu öffnen.

Das schlüssellose Fahrzeugzugangssystem ermöglicht es vorteilhaft, dass der Nutzer das Fahrzeug drahtlos öffnen und verriegeln kann, während das erfindungsgemäße Modul den Nutzer mittels eines auf Laufzeitmessungen basierenden Positionierungsverfahrens authentifiziert und nur Bedienhandlungen von authentifizierten Nutzern für das Zugangssystem an das Zugangssystem weiterleitet.

Der erste Abschnitt des erfindungsgemäßen Moduls ist bevorzugt an oder in einem Schiebefenster, einem feststehenden Fenster oder einer Heckklappe, ebenfalls bevorzugt in einer in der Heckklappe angeordneten Fensterscheibe, des Kraftfahrzeugs angeordnet. Mit anderen Worten ist der erste Abschnitt des Moduls bevorzugt an einer von außen sichtbaren Stelle des Fahrzeugs angeordnet. Durch diese Anordnung des ersten Abschnitts des Moduls in dem Fahrzeug wird verhindert, dass die Antenne durch die Metallkonstruktion des Fahrzeugs abgeschirmt wird. Folglich wird die Reichweite und Funktionalität der Antenne des erfindungsgemäßen Moduls wesentlich verbessert.

Besonders bevorzugt ist die Antenne auf das Schiebefenster, das feststehende Fenster oder die Heckklappe, bevorzugt der in der Heckklappe angeordneten Fensterscheibe, des Kraftfahrzeugs aufgebracht, vorzugsweise unmittelbar aufgebracht. Hierdurch werden die bereits im Zusammenhang des Moduls beschriebenen Kostenvorteile aufgrund der erleichterten Montage des erfindungsgemäßen Moduls in das Fahrzeug erreicht.

Der zweite Abschnitt des Moduls ist bevorzugt in oder hinter einer Innenverkleidung des Kraftfahrzeugs, insbesondere einer Türinnenverkleidung, angeordnet. Durch diese Anordnung des zweiten Abschnitts des Moduls ist das Modul durch die Innenverkleidung des Kraftfahrzeugs vor mechanischen und witterungsbedingten Einflüssen durch Natur und Nutzer geschützt. Außerdem ist der zweite Abschnitt des Moduls durch eine derartige Anordnung, also eine Anordnung des Moduls im Innenraum des Fahrzeug, vor einem Zugriff durch einen Unbefugten geschützt.

Ferner offenbart ist ein Modul zur elektronischen Verarbeitung einer drahtlosen Authentifizierung eines Nutzers für ein schlüsselloses Zugangssystem eines Kraftfahrzeugs. Das Modul zur elektronischen Verarbeitung enthält eine mit einer Antennenschnittstelle verbundene erste Steuereinrichtung, die dazu eingerichtet ist, eine zum Senden und Empfangen von Funksignalen eingerichtete externe Antenne über die Antennenschnittstelle anzusteuern. Die Antennenschnittstelle ist bevorzugt zur Datenübertragung und/oder dazu eingerichtet, eine mechanische Verbindung mit der externen Antenne und/oder einem die externe Antenne aufweisenden Träger herzustellen. Die mechanische Verbindung erfolgt bevorzugt kraftschlüssig oder formschlüssig. Die Antennenschnittstelle ist bevorzugt dazu eingerichtet, die mechanische Verbindung mittels Befestigungsmitteln zur Befestigung der externen Antenne und/oder dem die externe Antenne aufweisenden Träger herzustellen. Eine mechanische Verbindung ist beispielsweise eine Schraub-, Steck-, Kleb- oder Nietverbindung. Die mechanische Verbindung der Antennenschnittstelle hat den Vorteil, dass die Antenne nicht eigenständig an einer Fahrzeugkomponente befestigt werden muss, sondern durch die mechanische Verbindung zum Modul zur elektronischen Verarbeitung mittelbar an beispielsweise einer Fahrzeugkomponente befestigt ist.

Das Modul zur elektronischen Verarbeitung enthält ferner eine mit einem Zugangssystem zum Verriegeln oder Entriegeln einer Fahrzeugtür verbundene Fahrzeugschnittstelle und eine mit der ersten Steuereinrichtung verbundene zweite Steuereinrichtung, die dazu eingerichtet ist, ein auf Laufzeitmessungen basierendes Positionierungsverfahren unter Verwendung der ersten Steuereinrichtung und der externen Antenne durchzuführen und, basierend auf einem Ergebnis des Positionierungsverfahrens, ein Signal über die Fahrzeugschnittstelle an das Zugangssystem zu senden.

Außerdem umfasst das Modul zur elektronischen Verarbeitung einen zur Befestigung an einer Fahrzeugkomponente eingerichteten Befestigungsabschnitt.

Mit anderen Worten entspricht das Modul zur elektronischen Verarbeitung einer drahtlosen Authentifizierung eines Nutzers für ein schlüsselloses Zugangssystem eines Kraftfahrzeugs dem bereits beschriebenen zweiten Abschnitts des Moduls zur drahtlosen Authentifizierung eines Nutzers für ein schlüsselloses Zugangssystem eines Kraftfahrzeugs mit einem zur Befestigung an einer Fahrzeugkomponente eingerichteten Befestigungsabschnitt. Insofern wird auf die Beschreibung der Vorteile und Wirkungen auf die Beschreibung des Moduls zur drahtlosen Authentifizierung eines Nutzers für ein schlüsselloses Zugangssystem eines Kraftfahrzeugs Bezug genommen und eine erneute Beschreibung ausgelassen.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung der Innenansicht einer Fahrzeugtür eines Kraftfahrzeugs mit einem erfindungsgemäßen Modul gemäß einer Ausführungsform und
- Figur 2: eine schematische Darstellung eines Kraftfahrzeugs.

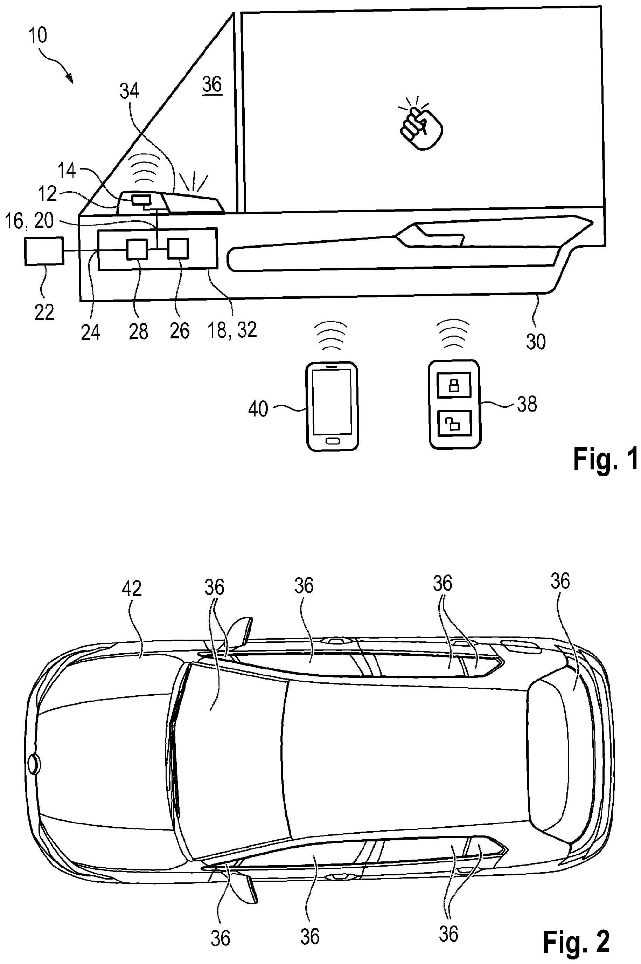

Figur 1 zeigt eine schematische Darstellung der Innenansicht einer Fahrzeugtür 30 eines Kraftfahrzeugs 42 gemäß einer Ausführungsform des erfindungsgemäßen Moduls 10. Das Kraftfahrzeug 42 weist ein schlüsselloses Zugangssystem 22 auf, das zur Kontrolle, insbesondere zum Entriegeln und Verriegeln von zumindest einer Fahrzeugtür 30, des Kraftfahrzeugs 42 ausgebildet ist.

Das erfindungsgemäße Modul 10 ist geeignet zur drahtlosen Authentifizierung eines Nutzers für das schlüssellose Zugangssystem 22 des Kraftfahrzeugs 42. Das Modul 10 weist einen ersten Abschnitt 12 mit einer zum Senden und Empfangen von Funksignalen eingerichteten Antenne 14 auf. In einem lösbar mit dem ersten Abschnitt 12 verbundenen zweiten Abschnitt 18 ist eine erste Steuereinrichtung 26 und eine zweite Steuereinrichtung 28 auf einer Leiterplatte 32 vorgesehen.

Die erste Steuereinrichtung 26 und die zweite Steuereinrichtung 28 sind über eine erste Schnittstelle 16 des ersten Abschnitts 12 und eine zweite Schnittstelle 20 des zweiten Abschnitts 18 mit der Antenne 14 verbunden. Die erste Steuereinrichtung 26 dient zur Ansteuerung der Antenne 14 über die mit der zweiten Schnittstelle 20 verbundene erste Schnittstelle 16. Zur Authentifizierung eines Nutzer führt die zweite Steuereinrichtung 28 ein auf Laufzeitmessungen basierendes Positionierungsverfahren unter Verwendung der ersten Steuereinrichtung 26 und der Antenne 14 durch. Mittels des Positionierungsverfahrens, vorteilhafterweise mittels UWB oder Bluetooth Low Energy Funktechnologie, wird die Entfernung eines Funkschlüssels 38 oder eines mobilen Endgeräts 40 des Nutzers ermittelt.

Dazu sendet die Antenne 14 unter der Kontrolle der ersten Steuereinrichtung 26 und der zweiten Steuereinrichtung 28 einen ersten UWP-Puls zu einem Zeitpunkt t₁ an den Funkschlüssel 38 oder das mobile Endgerät 40 des Nutzers. In Reaktion empfängt die zweite Steuereinrichtung 28 über die Antenne 14 einen zweiten UWB-Puls von dem Funkschlüssel 38 oder dem mobilen Endgerät 40 des Nutzers zu einem Zeitpunkt t₂. Basierend auf diesen Zeiten und gegebenenfalls weiteren in einem Speicher (nicht dargestellt) der zweiten Steuereinrichtung 28 gespeicherten Informationen, beispielsweise zu einer Verarbeitungszeit Δt_{VB} des ersten UWP-Pulses im Funkschlüssel 38 oder im mobilen Endgerät 40 des Nutzers, wird eine Entfernung der Antenne 14 zu dem Funkschlüssel 38 oder dem mobilen Endgerät 40 des Nutzers durch die zweite Steuereinrichtung 28 berechnet. Unterschreitet der so ermittelte Abstand einen in dem Speicher hinterlegten Grenzwert, erfolgt die Authentifikation des Nutzers durch die zweite Steuereinrichtung 28. Der so autorisierte Nutzer kann nun das Zugangssystem 22 über das erfindungsgemäße Modul 10 bedienen. Hierzu sendet er mittels Eingabe in den Funkschlüssel 38 oder in das mobile Endgerät 40 ein Bediensignal aus, welches über die Antenne 14 des Moduls empfangen wird. Da der Nutzer authentifiziert ist, sendet die zweite Steuereinrichtung 28 ein Signal über eine dritte Schnittstelle 24 an das Zugangssystem 22, um das Fahrzeug gemäß der Eingabe des Nutzers zu verriegeln oder zu entriegeln.

Zudem umfasst das Modul 10 einen Beschleunigungssensor (nicht dargestellt), der mit der zweiten Steuereinrichtung 28 verbunden ist. In dem Speicher der zweiten Steuereinrichtung 28 sind vorbestimmte zeitliche Abfolgen von Klopfsignalen abgelegt. Dies ermöglicht dem Nutzer, eine der vorbestimmten zeitlichen Abfolgen durch beispielsweise Klopfen auf die Fensterscheibe zu tätigen (angedeutet durch das Faustsymbol in Figur 1), welche durch die zweite Steuereinrichtung 28 als Bediensignal zum Entriegeln oder Verriegeln des Zugangssystem 22 erfasst wird. Nach abgeschlossener Authentifizierung des Nutzers mittels dem auf Laufzeitmessungen basierenden Positionierungsverfahren sendet die zweite Steuereinrichtung 28 das Signal zum Entriegeln oder Verriegeln an das Zugangssystem 22. Ein optisches Feedback zur Bestätigung oder Verweigerung des empfangenen Bediensignals wird durch eine Anzeige 34 im ersten Abschnitt 12 des Moduls angezeigt. Hierzu ist die zweite Steuereinrichtung 28 mit der Anzeige 34 verbunden und dazu eingerichtet, die Anzeige 34 anzusteuern.

Im Hinblick auf die in Figur 1 dargestellte Ausführungsform der Erfindung ist ersichtlich, dass der erste Abschnitt 12 des erfindungsgemäßen Moduls 10 auf der Innenseite einer Fahrzeugscheibe 36 angeordnet ist. Durch die Anordnung des ersten Abschnitts 12 oberhalb der Metallkonstruktion der Fahrzeugtür 30 werden die von der Antenne 14 gesendeten und empfangenen Funksignale nicht abgeschirmt. Folglich ist die Reichweite und Funktionalität der Antenne 14 des erfindungsgemäßen Moduls 10 im Vergleich zu einer Anordnung innerhalb der Fahrzeugtür 30 wesentlich verbessert. Außerdem ermöglicht die im ersten Abschnitt 12 angeordnete Anzeige 34 die optische Übertragung von Informationen an den Nutzer.

Der zweite Abschnitt 18 des erfindungsgemäßen Moduls 10 ist zwischen der Fahrzeugtür 30 und der Türinnenverkleidung angeordnet. Entgegen der in Figur 2 dargestellten Weise befindet sich der zweite Abschnitt 18 des Moduls 10 also aus Sicht des Fahrzeuginnenraums hinter der Türinnenverkleidung der Fahrzeugtür 30. Dementsprechend ist die im zweiten Abschnitt 18 des Moduls 10 angeordnete empfindliche Steuerelektronik 20, 24, 26, 28 vor mechanischen und witterungsbedingten Einflüssen durch Natur und Nutzer geschützt.

Figur 2 zeigt eine schematische Darstellung eines üblichen Kraftfahrzeugs 42. Obgleich der erste Abschnitt 12 des Moduls 10 an einer als Trapezfenster ausgestalteten Fahrzeugscheibe 36 angeordnet ist, wird mit Blick auf Figur 2 klar, dass die Vorteile des erfindungsgemäßen Moduls 10 an sämtlichen Fahrzeugscheiben 36 des Kraftfahrzeugs 42 realisiert werden können. Mit anderen Worten kann das erfindungsgemäße Modul 10 an oder in einem Schiebefenster oder einem feststehenden Fenster angeordnet sein. Auch die Frontscheibe oder die in der Heckklappe angeordnete Fensterscheibe des Kraftfahrzeugs 42 bieten sich als mögliche Einsatzorte an.

### Bezugszeichenliste

- 10: Modul zur drahtlosen Authentifizierung eines Nutzers
- 12: erster Abschnitt
- 14: Antenne
- 16: erste Schnittstelle
- 18: zweiter Abschnitt
- 20: zweite Schnittstelle
- 22: schlüsselloses Zugangssystem
- 24: dritte Schnittstelle
- 26: erste Steuereinrichtung
- 28: zweite Steuereinrichtung
- 30: Fahrzeugtür
- 32: Leiterplatte
- 34: Anzeige
- 36: Fahrzeugscheibe
- 38: Funkschlüssel
- 40: mobiles Endgerät
- 42: Kraftfahrzeug

## Patentansprüche

1. Modul (10) zur drahtlosen Authentifizierung eines Nutzers für ein schlüsselloses Zugangssystem (22) eines Kraftfahrzeugs (42), enthaltend:
einen ersten Abschnitt (12) aufweisend eine zum Senden und Empfangen von Funksignalen eingerichtete Antenne (14) und eine erste Schnittstelle (16) zum Übertragen der gesendeten oder empfangenen Funksignale;
einen lösbar mit dem ersten Abschnitt (12) verbundenen zweiten Abschnitt (18), aufweisend:
eine zur Verbindung mit der ersten Schnittstelle (16) eingerichtete zweite Schnittstelle (20),
eine mit einem Zugangssystem (22) zum Verriegeln oder Entriegeln einer Fahrzeugtür verbundene dritte Schnittstelle (24), und
eine mit der zweiten Schnittstelle (20) und der dritten Schnittstelle (24) verbundene Steuereinrichtung (26, 28), die dazu eingerichtet ist:
die Antenne (14) über die mit der zweiten Schnittstelle (20) verbundene erste Schnittstelle (16) anzusteuern,
ein auf Laufzeitmessungen basierendes Positionierungsverfahren unter Verwendung der Antenne (14) durchzuführen und
ein auf einem Ergebnis des Positionierungsverfahrens basierendes Signal über die dritte Schnittstelle (24) an das Zugangssystem (22) zu senden.

2. Modul (10) nach Anspruch 1, **dadurch gekennzeichnet, dass** die Steuereinrichtung (26, 28) zum Senden und Empfangen von UWB-Pulsen und/oder Bluetooth-Pulsen über die Antenne (14) eingerichtet ist.

3. Modul (10) nach Anspruch 1 oder 2, **dadurch gekennzeichnet, dass** die Steuereinrichtung (26, 28) zum Senden und Empfangen von NFC-Funksignalen über die Antenne (14) eingerichtet ist.

4. Modul (10) nach einem der vorherigen Ansprüche, **dadurch gekennzeichnet, dass** die Steuereinrichtung (26, 28) eine erste Steuereinrichtung (26) und eine zweite Steuereinrichtung (28) umfasst, die auf einer Leiterplatte (32) angeordnet sind, wobei die erste Steuereinrichtung (26) eine integrierte Schaltung (IC) zur Ansteuerung der Antenne (14) umfasst und wobei die zweite Steuereinrichtung (28) einen Mikrocontroller oder Mikroprozessor umfasst, der eingerichtet ist, das auf Laufzeitmessungen basierende Positionierungsverfahren unter Verwendung der integrierten Schaltung der ersten Steuereinrichtung (26) und der Antenne (14) durchzuführen und basierend auf einem Ergebnis des Positionierungsverfahrens das Signal über die dritte Schnittstelle (24) an das Zugangssystem (22) zu senden.

5. Modul (10) nach einem der vorherigen Ansprüche, **dadurch gekennzeichnet, dass** der erste Abschnitt (12) des Moduls (10) eine Anzeige (34), ein alphanumerisches Display oder eine LED umfasst.

6. Modul (10) nach einem der vorherigen Ansprüche, **dadurch gekennzeichnet, dass** der erste Abschnitt (12) des Moduls (10) einen transparenten Träger umfasst.

7. Modul (10) nach einem der vorherigen Ansprüche, **dadurch gekennzeichnet, dass** der erste Abschnitt (12) des Moduls (10) als ein Teil einer Fahrzeugscheibe (36) eines Kraftfahrzeugs (42) ausgebildet ist, auf den die Antenne (14) aufgebracht ist.

8. Modul (10) nach einem der vorherigen Ansprüche, **dadurch gekennzeichnet, dass** der zweite Abschnitt (18) des Moduls (10) einen zur Befestigung an einer Fahrzeugkomponente eines Kraftfahrzeugs eingerichteten Befestigungsabschnitt umfasst.

9. Modul (10) nach einem der vorherigen Ansprüche, **dadurch gekennzeichnet, dass** das Modul (10) ferner einen Beschleunigungssensor umfasst und die Steuereinrichtung (26, 28) dazu eingerichtet ist, aus Sensordaten des Beschleunigungssensors Klopfgesten zur Bedienung des Zugangssystems (22) zu erfassen.

10. Modul (10) nach einem der vorherigen Ansprüche, **dadurch gekennzeichnet, dass** die Steuereinrichtung (26, 28) dazu eingerichtet ist, die Antenne (14) zur drahtlosen Datenkommunikation mit einem Sendeempfänger eines elektronischen Funkschlüssels (38) und/oder eines mobilen Endgeräts (40) anzusteuern.

11. Kraftfahrzeug (42), aufweisend:
ein schlüsselloses Zugangssystem (22) zum elektronisch gesteuerten Verriegeln und Entriegeln zumindest einer Fahrzeugtür (30) des Kraftfahrzeugs (42) und
ein Modul (10) gemäß einem der vorherigen Ansprüche.

12. Kraftfahrzeug (42) nach Anspruch 11, **dadurch gekennzeichnet, dass** der erste Abschnitt (12) des Moduls (10) an einem Schiebefenster, einem feststehenden Fenster oder einer Heckklappe des Kraftfahrzeugs (42) angeordnet ist.

13. Kraftfahrzeug (42) nach Anspruch 12, **dadurch gekennzeichnet, dass** die Antenne (14) auf das Schiebefenster, das feststehende Fenster oder die Heckklappe des Kraftfahrzeugs (42) aufgebracht ist.

14. Kraftfahrzeug (42) nach einem der Ansprüche 11 bis 13, **dadurch gekennzeichnet, dass** der zweite Abschnitt (18) des Moduls (10) in oder hinter einer Innenverkleidung des Kraftfahrzeugs (42) angeordnet ist.

15. Modul zur elektronischen Verarbeitung einer drahtlosen Authentifizierung eines Nutzers für ein schlüsselloses Zugangssystem (22) eines Kraftfahrzeugs (42), enthaltend:
eine mit einer Antennenschnittstelle verbundene erste Steuereinrichtung (26), die dazu eingerichtet ist, eine zum Senden und Empfangen von Funksignalen eingerichtete externe Antenne über die Antennenschnittstelle anzusteuern,
eine mit einem Zugangssystem (22) zum Verriegeln oder Entriegeln einer Fahrzeugtür (30) verbundene Fahrzeugschnittstelle,
eine mit der ersten Steuereinrichtung (26) verbundene zweite Steuereinrichtung (28), die dazu eingerichtet ist, ein auf Laufzeitmessungen basierendes Positionierungsverfahren unter Verwendung der ersten Steuereinrichtung (26) und der externen Antenne durchzuführen und, basierend auf einem Ergebnis des Positionierungsverfahrens, ein Signal über die Fahrzeugschnittstelle an das Zugangssystem (22) zu senden, und
einen zur Befestigung an einer Fahrzeugkomponente eingerichteten Befestigungsabschnitt.
